# EUROPEAN PATENT APPLICATION

(11) **EP 2 495 847 A1**
(43) Date of publication of application: **05.09.2012**
(21) Application number: 11156673.3
(22) Date of filing: 02.03.2011
(51) Int. Cl.: H02K 1/32, H02K 9/02

(54) **Electric motor capable of heat dissipation**

(71) Applicant: Tsai, Ching-Li, West District Chiayi City 600 (CN)
(72) Inventor: Tsai, Ching-Li, West District Chiayi City 600 (CN)
(74) Representative: Merrifield, Sarah Elizabeth

(57) **Abstract**

An electric motor includes a motor housing (3) configured with an inner receiving space (30), and including a surrounding wall (32) formed with an air inlet (321), and an end wall (33) formed with air outlets (331). The air inlet (321) and the air outlets (331) are in spatial communication with the inner receiving space (30). A rotor unit (4) is disposed rotatably in the inner receiving space (30), and includes a rotor shaft (41) extending along a pivot axis (a1) and rotatable relative to the motor housing (30) about the pivot axis (a1), and a rotor (42) sleeved fixedly on the rotor shaft (41). Astatorunit (2) is mounted fixedly in the motor housing (3), and is disposed spacedly around the rotor (42). The rotor (42) has an annular outer surface formed with an air groove (423) that extends from a first end (425) of the rotor (42) to a second end (426) of the rotor (42) opposite to the first end (425) in the pivot axis (a1).

## Description

The invention relates to an electric motor, and more particularly, to an electric motor capable of heat dissipation.

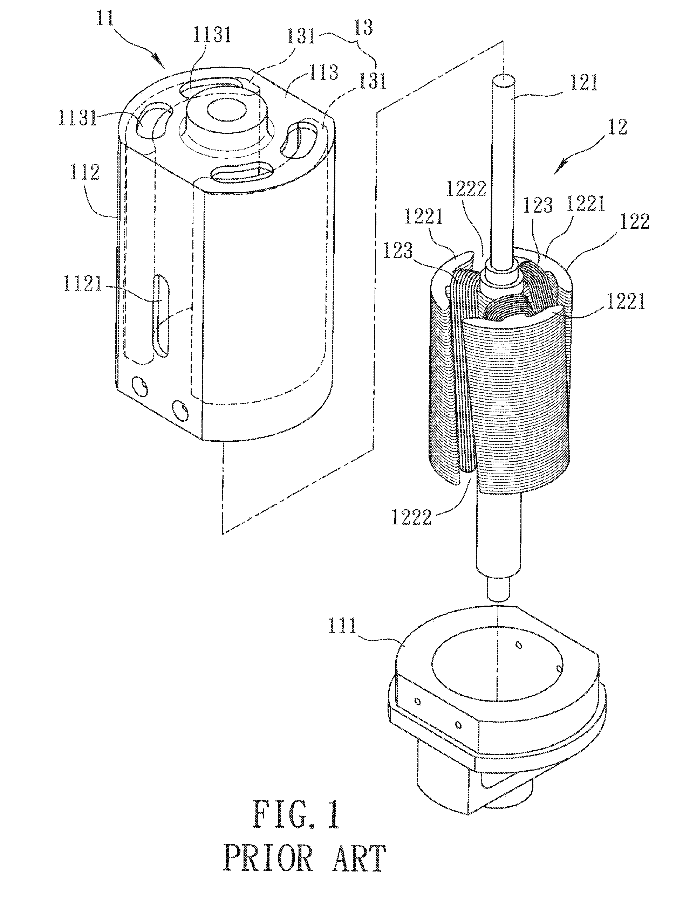

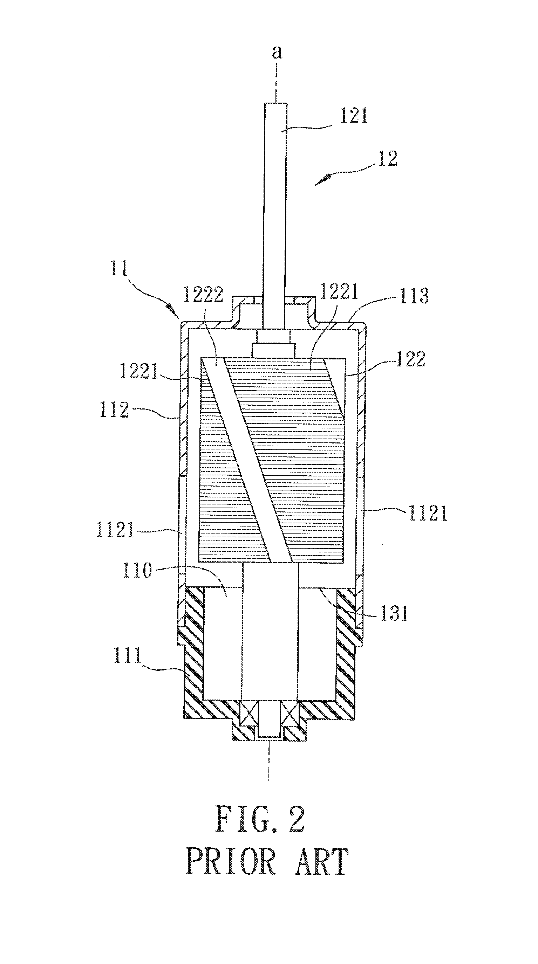

Referring to Figures 1 to 3, a conventional electric motor disclosed in Taiwanese Utility Model No. M327998 is shown to include a motor housing 11, a rotor unit 12, and a stator unit 13.

The motor housing 11 includes a hollow base body 111, a looped surrounding wall 112 connected to the base body 111, and a top wall 113 connected to the surrounding wall 112, and cooperating with the surrounding wall 112 and the base body 111 to define an inner receiving space 110. The surrounding wall 112 is formed with two air inlets 1121. The top wall 113 is formed with a plurality of air outlets 1131. The air inlets 1121 and the air outlets 1131 are in spatial communication with the inner receiving space 110.

The rotor unit 12 is disposed rotatably in the inner receiving space 110 in the motor housing 11. The rotor unit 12 includes a rotor shaft 121, a rotor 122 and a plurality of windings 123. The rotor shaft 121 extends along a central axis (a) of the motor housing 11, and is rotatable relative to the motor housing 11 about the central axis (1) . The rotor 122 is sleeved fixedly on the rotor shaft 121, and has rotor pole portions 1221 radially spaced apart from each other such that an inclined spacer 1222 is formed between any adjacent two of the rotor pole portions 1221. The windings 123 are wounded on the rotor 122. Adhesive gel 124 is coated on the rotor 122 for fastening the windings 123.

The stator unit 113 is mounted fixedly in the motor housing 11, and is disposed spacedly around the rotor 122. The stator unit 113 includes two magnetic members 1131.

During operation of the conventional electric motor, cool air flows into the inner receiving space 110 via the air inlets 1121 in the surrounding wall 112 of the motor housing 11, passes through the spacers 1222, and flows out of the motor housing 11 via the air outlets 1131 in the top wall 113 of the motor housing 11. Therefore, heat accumulated in the motor housing 11 can be dissipated by airflow.

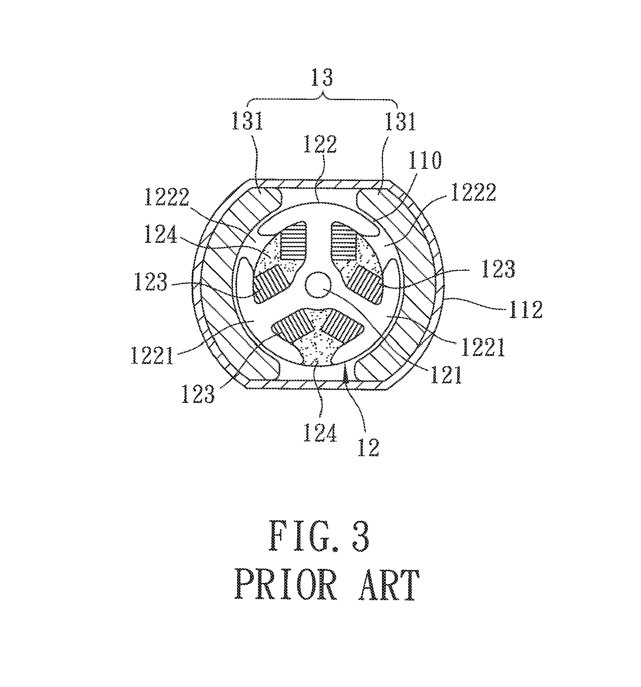

However, because the adhesive gel 124 is manually injected onto the rotor 122, the spacers 1222 may be unintentionally filled by the adhesive gel 124, as shown in Figure 3. Thus, a stable heat dissipation effect cannot be ensured.

Therefore, an object of the present invention is to provide an electric motor that can ensure a stable heat dissipating effect.

According to the present invention, an electricmotor comprises:
a motor housing extending in an axial direction and configured with an inner receiving space, the motor housing including a surrounding wall formed with at least one air inlet, and an end wall connected to the surrounding wall and formed with a plurality of air outlets, the air inlet and the air outlets being in spatial communication with the inner receiving space;
a rotor unit disposed rotatably in the motor housing and including
a rotor shaft extending along a pivot axis parallel to the axial direction, and rotatable relative to said motor housing about the pivot axis, said rotor shaft having a drive end portion extending outward from said end wall of said motor housing, and
a rotor sleeved fixedly on the rotor shaft and having first and second ends opposite to each other in the axial direction, the rotor having an annular outer surface formed with at least one air groove that extends from the first end to the second end; and
a stator unit mounted fixedly in the motor housing, and disposed spacedly around the rotor.

Other features and advantages of the present invention will become apparent in the following detailed description of the preferred embodiments with reference to the accompanying drawings, of which:
Figure 1 is a partly exploded perspective view of a conventional electric motor;
Figure 2 is a partly schematic sectional, side view of the conventional electric motor;
Figure 3 is a partly schematic sectional, top view of the conventional electric motor;
Figure 4 is a partly exploded perspective view showing the first preferred embodiment of an electric motor according to the present invention;
Figure 5 is a partly schematic sectional, side view showing the first preferred embodiment;
Figure 6 is a schematic sectional, top view showing the first preferred, embodiment; and
Figure 7 is a partly schematic sectional, side view showing the second preferred embodiment of an electric motor according to the present invention.

Before the present invention is described in greater detail, it should be noted that like elements are denoted by the same reference numerals throughout the disclosure.

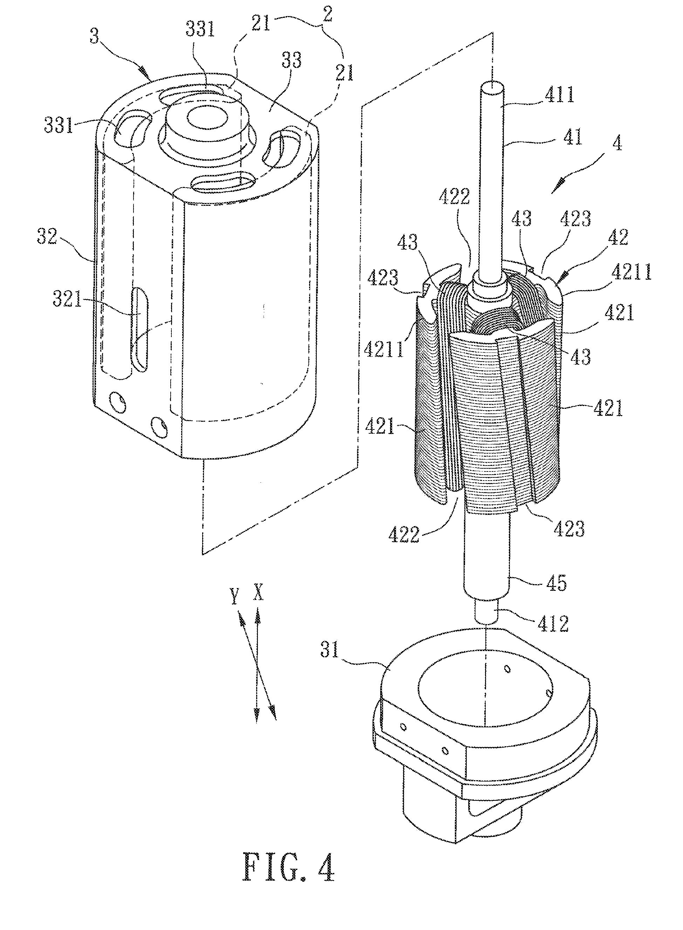

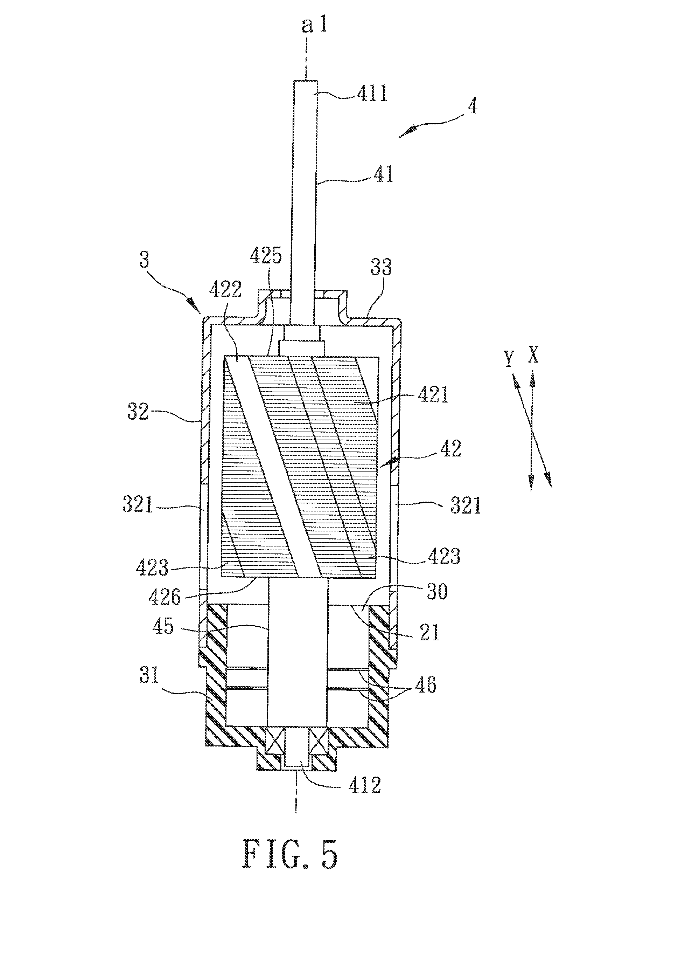

Referring to Figures 4 to 6, the first preferred embodiment of an electric motor according to the present invention is shown to include a motor housing 3, a rotor unit 4, and a stator unit 2.

The motor housing 3 extends in an axial direction (X). The motor housing 3 includes a hollow base body 31, a looped surrounding wall 32 connected to the base body 31, and an end wall 33 connected to the surrounding wall 32 and cooperating with the surrounding wall and the base body 31 to define an inner receiving space 30. The surrounding wall is formed with two air inlets 321. The end wall 33 is formed with a plurality of air outlets 331. The air inlets 321 and the air outlets 331 are in spatial communication with the inner receiving space 30.

The rotor unit 4 is disposed rotatably in the inner receiving space 30 in the motor housing 3, and includes a rotor shaft 41, a rotor 42, a plurality of windings 43, adhesive gel 44, a commutator 45, and a plurality of carbon brushes 46. The rotor shaft 41 extends along a pivot axis (a1) parallel to the axial direction (X), and is rotatable relative to the motor housing 3 about the pivot axis (a1). The rotor shaft 41 has a drive end portion 411, a mounting end portion 412 opposite to the drive end portion 411 in the axial direction (X) ,and an intermediate portion interconnecting the drive end portion 411 and the mounting end portion 412. The drive end portion 411 extends outward from the end wall 33 of the motor housing 3. The mounting end portion 412 is mounted in the base body 31 of the motor housing 3. The rotor 42 is sleeved fixedly on the intermediate portion of the rotor shaft 41, and has first and second ends 425, 426 opposite to each other in the axial direction (X). The rotor 42 includes a plurality of rotor pole portions 421 radially spaced apart from each other such that an inclined spacer 422 is formed between any adjacent two of the rotor pole portions 421. Each rotor pole portion 421 has a curved outer face 4211. The curved outer faces 4211 of the rotor pole portions 421 constitute an annular outer surface of the rotor 42. The curved outer face 4211 of each rotor pole portion 421 is formed with an air groove 423 that extends from the first, end 425 to the second end 426. In this embodiment, the air groove 423 in each rotor pole portion 421 extends in a direction (Y) oblique to the axial direction (X). The windings 43 are wound on the rotor 42. The adhesive gel 44 is coated on the rotor 42 to fasten the windings 43 on the rotor 42. The commutator 45 is mounted on the mounting end portion 412 of the rotor shaft 41, and is disposed in the base body 31 of the motor housing 3. The carbon brushes 46 are disposed in the base body 31 of the motor housing 3 and contact the commutator 45.

The stator unit 4 is mounted fixedly in the motor housing 3, and is disposed spacedly around the rotor 42. In this embodiment, the stator unit 4 includes two magnetic members 21.

During operation of the electric motor, cool air flows into the inner receiving space 30 via the air inlets 321 in the surrounding wall 32 of the motor housing 3, passes through the spacers 1222 and the air grooves 423, and flows out of the motor housing 3 via the air outlets 331 in the end wall 33 of the motor housing 3. Therefore, heat accumulated in the motor housing 3 can be dissipated by airflow.

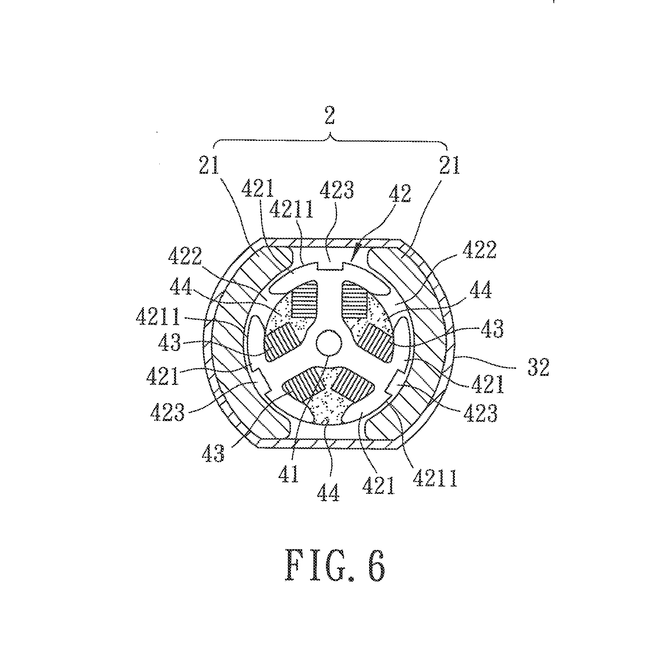

Due to the presence of the air grooves 423, the electric motor of the present invention can provide a stable heat dissipation effect even if one or more spacers 422 are accidentally filled by the adhesive gel 44 (see Figure 6).

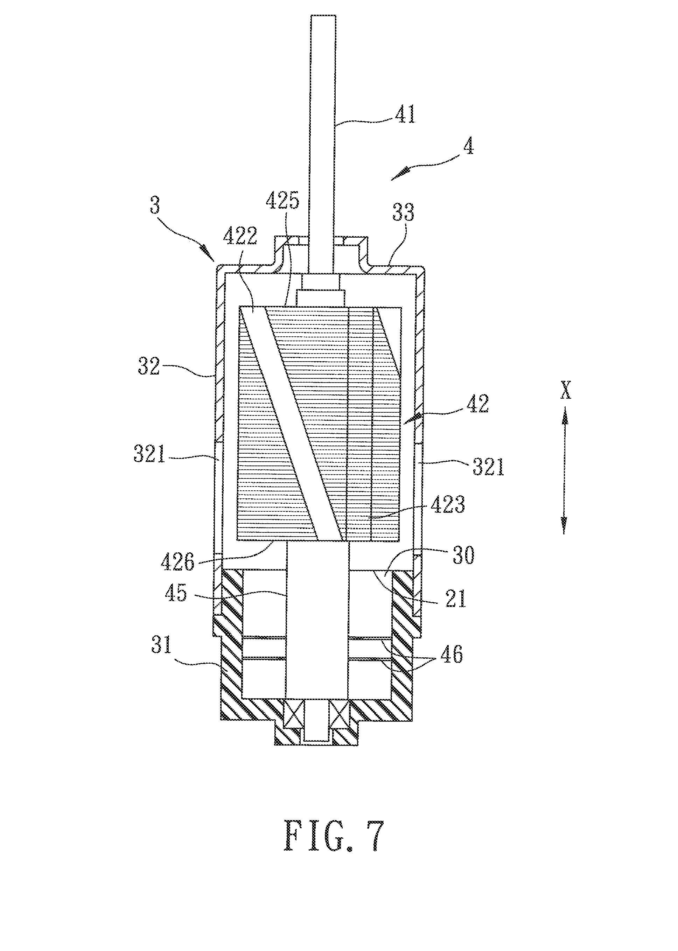

Figure 7 illustrates the second preferred embodiment of an electric motor according to this invention, which is a modification of the first preferred embodiment. Unlike the previous embodiment, the air groove 423 in each rotor pole portion 421 extends in the axial direction (X).

## Claims

1. An electric motor **characterized by**:
a motor housing (3) extending in an axial direction (X) and configured with an inner receiving space (30), said motor housing (3) including a surrounding wall (32) formed with at least one air inlet (321), and an end wall (33) connected to said surrounding wall (32) and formed with a plurality of air outlets (331), said air inlet (321) and said air outlets (331) being in spatial communication with said inner receiving space (30);
a rotor unit (4) disposed rotatably in said inner receiving space (30) in said motor housing (3) and including
a rotor shaft (41) extending along a pivot axis (a1) parallel to the axial direction (X), and rotatable relative to said motor housing (3) about the pivot axis (a1), said rotor shaft (41) having a drive end portion (411) extending outward from said end wall (33) of said motor housing (3), and
a rotor (42) sleeved fixedly on said rotor shaft (41) and having first and second ends (425, 426) opposite to each other in the axial direction (X), said rotor (42) having an annular outer surface formed with at least one air groove (423) that extends from said first end (425) to said second end (426); and
a stator unit (2) mounted fixedly in said motor housing (3), and disposed spacedly around said rotor (42) .

2. The electric motor as claimed in Claim 1, **characterized in that** said rotor (42) of said rotor unit (4) includes:
a plurality of rotor pole portions (421) radially spaced apart from each other such that a spacer (422) is formed between any adjacent two of said rotor pole portions (421), each of said rotor pole portions (421) having a curved outer face (4211), said curved outer faces (4211) of said rotor pole portions (421) constituting said annular outer surface of said rotor (42), said curved outer face (4211) of one of said rotor pole portions (421) being formed with said air groove (423);
a plurality of windings (43) wound on said rotor (42); and
adhesive gel (44) coated on said rotor for fastening said windings (43).

3. The electric motor as claimed in Claim 2, **characterized in that** said annular outer surface of said rotor (42) is formed with a plurality of said air grooves (423), said air grooves (423) being formed respectively in said curved outer faces (4211) of said rotor pole portions (421).

4. The electric motor as claimed in Claim 1, **characterized in that** said air groove (423) extends in a direction (Y) oblique to the axial direction (X).

5. The electric motor as claimed in Claim 1, **characterized in that** said air groove (423) extends in the axial direction (X).

6. The electric motor as claimed in Claim 1, **characterized in that**:
said motor housing (3) further includes a hollow base body (31) connected to said surrounding wall (32);
said rotor shaft (41) of said rotor unit (4) further has a mounting end portion (412) opposite to said drive end portion (411) in the axial direction (X) and mounted in said base body (31) of said motor housing (3); and
said rotor unit (4) further includes a commutator (45) mounted on said mounting end portion (412) of said rotor shaft (41) and disposed in said base body (31) of said motor housing (3), and a plurality of carbon brushes (46) disposed in said base body (31) of said motor housing (3) and contacting said commutator (45).

## Amended claims

### Amended claims in accordance with Rule 137(2) EPC.

**1.** An electric motor including
a motor housing (3) extending in an axial direction (X) and configured with an inner receiving space (30), the motor housing (3) including a surrounding wall (32) formed with at least one air inlet (321), and an end wall (33) connected to the surrounding wall (32) and formed with a plurality of air outlets (331), the air inlet (321) and the air outlets (331) being in spatial communication with the inner receiving space (30);
a stator unit (2) mounted fixedly in the motor housing (3); and
a rotor unit (4) disposed rotatably in the inner receiving space (30) in the motor housing (3) and including:
a rotor shaft (41) extending along a pivot axis (a1) parallel to the axial direction (X) , and rotatable relative to the motor housing (3) about the pivot axis (a1), the rotor shaft (41) having a drive end portion (411) extending outward from the end wall (33) of the motor housing (3); and
a rotor (42) sleeved fixedly on said rotor shaft (41) and surrounded by the stator unit (2), the rotor (42) having:
first and second ends (425, 426) opposite to each other in the axial direction (X),
an annular outer surface,
a plurality of rotor pole portions (421) radially spaced apart from each other such that a spacer (422) is formed between any adjacent two of the rotor pole portions (421), thereby forming a plurality of the spacers (422) in the rotor (42), each of the rotor pole portions (421) having a curved outer face (4211), the curved outer faces (4211) of said rotor pole portions (421) constituting the annular outer surface of the rotor (42),
a plurality of windings (43) wound on the rotor pole portions (421) of the rotor (42) and received in the spacers (422), and
adhesive gel (44) coated onto and fastening the windings (43);
the electric motor being **characterised in that** the annular outer surface of the rotor (42) is formed with at least one air groove (423) that extends from the first end (425) to the second end (426), the curved outer face (4211) of one of the rotor pole portions (421) being formed with the air groove (423).

**2.** The electric motor as claimed in Claim 1, **characterized in that** the annular outer surface of the rotor (42) is formed with a plurality of the air grooves (423), the air grooves (423) being formed respectively in the curved outer faces (4211) of the rotor pole portions (421).

**3.** The electric motor as claimed in Claim 1, **characterized in that** the air groove (423) extends in a direction (Y) oblique to the axial direction (X).

**4.** The electric motor as claimed in Claim 1, **characterized in that** the air groove (423) extends in the axial direction (X).

**5.** The electric motor as claimed in Claim 1, **characterized in that**:
the motor housing (3) further includes a hollow base body (31) connected to the surrounding wall (32);
the rotor shaft (41) of the rotor unit (4) further has a mounting end portion (412) opposite to the drive end portion (411) in the axial direction (X) and mounted in the base body (31) of the motor housing (3); and
the rotor unit (4) further includes a commutator (45) mounted on the mounting end portion (412) of the rotor shaft (41) and disposed in the base body (31) of the motor housing (3), and a plurality of carbon brushes (46) disposed in the base body (31) of the motor housing (3) and contacting the commutator (45).
